Europäisches Patentamt

European Patent Office

Office européen des brevets

(11) Veröffentlichungsnummer: **0 497 093 A2**

## (12) EUROPÄISCHE PATENTANMELDUNG

(21) Anmeldenummer: **92100151.7**

(22) Anmeldetag: **07.01.92**

(51) Int. Cl.5: **G08G 1/08**, G08G 1/052

(30) Priorität: **28.01.91 DE 4102460**

(43) Veröffentlichungstag der Anmeldung:
**05.08.92 Patentblatt 92/32**

(84) Benannte Vertragsstaaten:
**AT BE CH DE ES FR GB GR IT LI LU NL**

(71) Anmelder: **SIEMENS AKTIENGESELLSCHAFT**
**Wittelsbacherplatz 2**
**W-8000 München 2(DE)**

(72) Erfinder: **Von Pieverling, Klaus, Dr.-Ing.**
**Remigerstrasse 1**
**W-8190 Wolfratshausen(DE)**

(54) **Verfahren und Einrichtung zur Erfassung von Fahrzeugen im Strassenverkehr für die Steuerung einer Verkehrssignalanlage.**

(57) Verfahren und Einrichtung zur Erfassung von Fahrzeugen im Straßenverkehr für die Steuerung einer Verkehrssignalanlage. Die Anlage weist Signalgeber, ein Verkehrssteuergerät und zumindest einen Fahrzeugdetektor als Straßenverkehrssensor auf, wobei die Signale des Fahrzeugdetektors im Steuergerät zur Bildung von Schaltkriterien für die Verkehrssignalanlage verarbeitet werden. Der Fahrzeugdetektor ist von einer Radarantennenanordnung und einem zugehörigen Radargerät mit Sender und Empfänger gebildet. Die Radarantennenanordnung ist an einem zu überwachenden Fahrbahnbereich, z.B. an einem Straßenabschnitt einer Straßenzufahrt eines Verkehrsknotens oder einer Fernstraße, angeordnet. Das Radargerät detektiert mittels Entfernungs-und Geschwindigkeitsselektion jeweilige Fahrzeuge. Die Entfernungsselektion, bei der eine bestimmte Anzahl von Entfernungstoren gebildet wird, dient für die Fahrzeugspurtrennung oder/und für die Entfernungsmessungen pro jeweiliger Fahrspur. Innerhalb eines jeden Entfernungstores können Geschwindigkeitskanäle für eine zusätzliche Auswertung der Fahrzeuggeschwindigkeiten gebildet werden.

FIG 1

Die Erfindung bezieht sich auf ein Verfahren und eine Einrichtung zur Erfassung von Fahrzeugen im Straßenverkehr für die Steuerung einer Verkehrssignalanlage, welche Signalgeber, ein Verkehrssteuergerät und zumindest einen Fahrzeugdetektor als Straßenverkehrssensor aufweist, wobei die Signale des Fahrzeugdetektors im Steuergerät zur Bildung von Schaltkriterien für die Verkehrssignalanlage verarbeitet werden.

Zur Steuerung des Straßenverkehrsflusses werden insbesondere in Städten Verkehrssignalanlagen eingesetzt. Eine leistungsfähige Verkehrssteuerung erfordert dabei die Erfassung des Verkehrsaufkommens. Diese dazu notwendige Verkehrsdatenerfassung verwendet im allgemeinen automatisch arbeitende Straßenverkehrssensoren.

Als Straßenverkehrssensoren sind Magnetfeldsensoren, wie Hallsensoren oder Schleifendetektoren, Ultraschallsensoren oder Strahlungssensoren bekannt. Am weitensten verbreitet sind Schleifendetektoren, die in Form einer oder mehrerer Drahtschleifen in die Straßen eingegossen sind.

Nachteilig ist bei Schleifendetektoren das Einbringen in die Straße und die dafür notwendigen Straßenarbeiten, die nicht nur einen großen Aufwand darstellen, sondern auch zur Beschädigung der Straßenoberfläche führen können. Für die Erfassung eines auf einen Knoten zufließenden Verkehrsflusses aus größerer Entfernung sind weitere Schleifendetektoren, die in einem größeren Abstand zur Signalanlage angeordnet werden müssen, erforderlich, was diesen Aufwand zusätzlich erhöht. Ähnliches gilt für Hallsensoren.

Ultraschallsensoren, welche nach dem Radarverfahren arbeiten und das von einer Antenne ausgesandte Signal als reflektiertes Echo empfangen und auswerten, lassen sich mit geringem Aufwand installieren. Ihre Reichweite ist jedoch auf 10-20 m begrenzt, bedingt durch hohe Luftdämpfung sowie Störungen durch verkehrsbedingte Ultraschallquellen.

Bei der Verwendung von Strahlungssensoren, beispielsweise Infrarotdetektoren, die als passive optische Verkehrsdetektoren ausgebildet sind, wird im Meßfeldbereich des Infrarotdetektors die Infrarotstrahlung, herrührend vom Fahrzeug, erfaßt.

Von Nachteil ist, daß die Meßentfernung für einen Bereich bis maximal 20 bis 25 m beschränkt ist. Ferner ist von Nachteil, daß nur zeitlich sich ändernde Temperaturgradienten gemessen werden können, also keine statistische Temperaturmessung möglich ist, wodurch sich bei der Detektion stehender Fahrzeuge Probleme ergeben.

Bekannt sind ferner Videosensoren, die von einer Fernsehkamera gebildet sind, die auf einer erhöhten Stelle montiert die Verkehrsszene beobachten, wobei mit Hilfe einer automatischen Signalauswertung Objekte wie Fahrzeuge identifiziert, verfolgt und somit sowohl nach Richtung als Entfernung erfaßt werden können. Derartige Videosensoren für die Verkehrserfassung sind aufwendig und teuer und erfordern darüberhinaus eine Videosignalauswertung mit einer sehr hohen Rechnerleistung. Für einen allgemeinen Einsatz sind derartige Sensoren noch sehr aufwendig.

Es ist auch bekannt, Mikrowellensensoren, welche im allgemeinen nach einem Radarverfahren arbeiten, für die Verkehrserfassung einzusetzen. Eine Hochfrequenzquelle sendet Energie über eine Antenne auf die zu erfassenden Objekte. Die reflektierte Hochfrequenzenergie wird dann im Empfänger ausgewertet. Diese Radarsensoren wurden bisher hauptsächlich zur Erfassung der Geschwindigkeit von Fahrzeugen verwendet, um Geschwindigkeitssünder zu detektieren.

Aufgabe der Erfindung ist es, ein Radarverfahren und entsprechende Einrichtungen für die Erfassung von Fahrzeugen derart auszubilden, daß die mit einem Radargerät gewonnenen Daten über den Verkehrsfluß zur Steuerung einer Verkehrssignalanlage herangezogen werden können.

Diese Aufgabe wird bezüglich des Verfahrens mit den Merkmalen des Anspruchs 1 und bezüglich einer Einrichtung mit den Merkmalen des Anspruchs 6 oder 8 gelöst.

Bei dem erfindungsgemäßen Verfahren wird für die Fahrzeugdetektion eine Radarantennenanordnung und ein zugehöriges Radargerät mit einer entsprechenden Sende- und Empfangseinrichtung verwendet, um auf einem zu überwachenden Straßenabschnitt mit dem Radargerät mittels einer Entfernungs- und Geschwindigkeitsselektion die jeweiligen Fahrzeuge zu detektieren. Dabei wird zumindest für einen bestimmten Straßenbereich die jeweilige Fahrzeuggeschwindigkeit und die Entfernung zu den Fahrzeugen gemessen und weiter verarbeitet, um somit das Verkehrsaufkommen in dem überwachten Straßenabschnitt zu gewinnen. Die genaue Kenntnis des Verkehrsgeschehens erlaubt dann eine präzise Steuerung der Verkehrssignalanlage.

Zweckmäßigerweise wird bei dem erfindungsgemäßen Verfahren für die Entfernungsselektion eine bestimmte Anzahl von Entfernungstoren gebildet, wobei die Entfernungsselektion entweder für die Fahrzeugspurtrennung oder für die Entfernungsmessung oder auch für die Entfernungsmessung innerhalb der jeweiligen Spur genutzt wird.

Es ist vorteilhaft, innerhalb jedes Entfernungstores Geschwindigkeitskanäle zu bilden, so daß aufgrund der ermittelten Entfernung und der Geschwindigkeit des jeweiligen Fahrzeugs nebeneinander und hintereinander fahrende Fahrzeuge voneinander unterschieden werden können. Auf diese Weise wird ein exaktes Abbild des Verkehrsgeschehens auf einem bestimmten Straßenabschnitt für die Steuerung der Verkehrssignalanlage erfaßt und ausgewertet.

Bei dem erfindungsgemäßen Verfahren kann es zweckmäßig sein, das Radargerät im FM-CW-Modus zu betreiben, wobei in vorteilhafter Weise aus den empfangenen Radarsignalen mittels einer Frequenzanalyse, beispielsweise mit einer digitalen Filterbank, die jeweiligen Entfernungstore gebildet werden. Innerhalb dieser Entfernungstore kann für jedes Entfernungstor mittels weiterer Frequenzanalysen die jeweilige Fahrzeuggeschwindigkeit gemessen werden.

In einer weiteren Ausgestaltung des erfindungsgemäßen Verfahrens kann das Radargerät im Winkelpeilungsmodus betrieben werden, wobei zumindest zwei azimutal gegeneinander versetzte Strahlungskeulen vorgesehen sind, die auf den zu erfassenden Straßenbereich ausgerichtet sind. Aus den Empfangssignalen dieser beiden Sendekeulen werden aufgrund des gemessenen Winkels und der gemessenen Entfernung sowohl Entfernungstore als auch Geschwindigkeitskanäle für die Fahrzeugdetektion gebildet, so daß für jede beliebige Entfernung und Spur jeweilige Fahrzeuge detektiert werden können.

Zur Durchführung des erfindungsgemäßen Verfahrens mit Hilfe eines FM-CW-Radargerätes kann eine Radarantennenanordnung mit mindestens einer Radarantenne vorgesehen sein, die einen frequenzmodulierten Oszillator und eine Mischerdiode aufweist. In einem der Mischerdiode nachgeschalteten Verstärker werden die Empfangssignale verstärkt und dann einer Digitalauswerteeinrichtung zur Spektralanalyse zugeführt. Die Digitalauswertung kann fest verdrahtet durch Mikrorechner oder eine geeignete Kombination realisiert sein. Jedem Teilfilter des Digitalfilters läßt sich somit ein Entfernungsbereich, d.h. ein Entfernungstor, zuordnen. Die an den Ausgängen des Digitalfilters anstehenden Signale für jeweilige Entfernungstore können zur weiteren Spektralanalyse einem Mikrorechner zugeführt werden, um jeweilige Geschwindigkeitskanäle zu bilden. Die Ausgangssignale des Mikrorechners werden dem Verkehrssteuergerät zugeführt, wo in einem Verkehrsrechner die Fahrzeugdaten für die Steuerung der Signalanalage verarbeitet werden. Mit dem Radargerät mit lediglich einer Radarantenne und Entfernungstorbildung können z.B. verschiedene Fahrspuren getrennt voneinander erfaßt und die jeweiligen Fahrzeuge detektiert werden, um aus den ermittelten Werten die Kriterien für die Steuerung der Signalanlage herzuleiten.

Zur Durchführung des erfindungsgemäßen Verfahrens mit Winkelpeilung weist das Radargerät bzw. die Antennenanordnung mindestens zwei zueinander versetzte Strahlungskeulen auf. Das Radarteil, d.h. die Radarantennenanordnung und das Radargerät, enthält zwei Mischerdioden und einen frequenzmodulierten Oszillator. Die von den Mischerdioden kommenden Radarempfangssignale werden einer jeweiligen Verstärker- und Filterstufe zugeführt, deren jeweiliges Ausgangssignal für die weitere Verarbeitung einem Mikro-Computer zugeführt werden. Über eine Schnittstelle werden an das Verkehrssteuergerät die Ausgangssignale des Mikro-Computers für die Signalgebersteuerung weitergeleitet. Der Mikro-Computer steuert auch die Frequenzmodulation des Oszillators.

Weitere Einzelheiten und Ausgestaltungen der Erfindung werden im folgenden an Ausführungsbeispielen anhand von Zeichnungen näher erläutert. Dabei zeigen

Fig. 1      ein Prinzipschaltbild für einen Fahrzeugdetektor,

Fig. 2      ein Zeitablaufdiagramm entsprechend zur Fig. 1,

Fig. 3      eine Radarantennenanordnung mit zwei Antennen für Fern- und Nahbereich am Straßenrand,

Fig. 4      schematisch ein Radargerät mit Winkelpeilung,

Fig. 5      ein Blockschaltbild für eine mögliche Ausführung eines Radargerätes und

Fig. 6      schematisch eine Radarantennenanordnung über einem Straßenabschnitt.

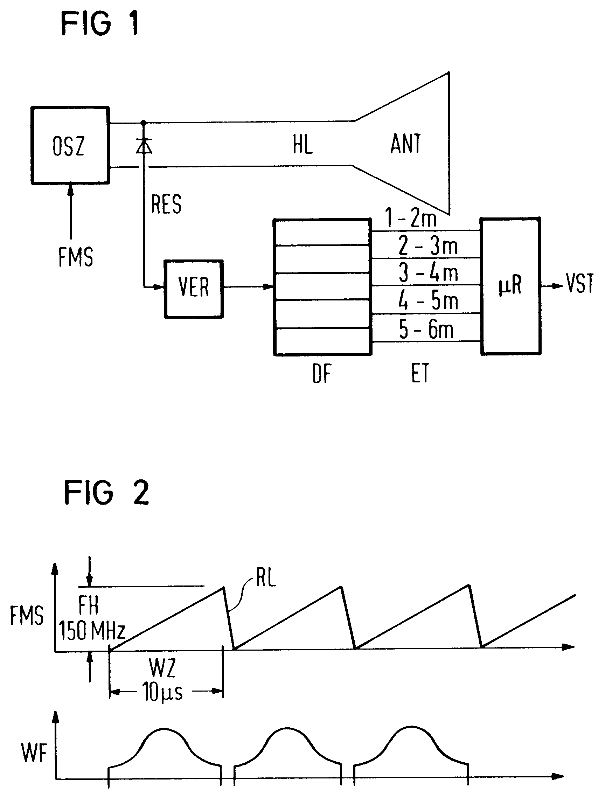

Das Prinzipschaltbild eines FM-CW-Radargerätes ist in Fig. 1 dargestellt. Das Sendesignal eines Gunn-Oszillators OSZ läuft über einen Hohlleiter HL in die Antenne ANT. Die reflektierte Echoenergie (Radarempfangssignale) überlagert sich mit dem Ausgangssignal des Gunn-Oszillators OSC. Diese Überlagerung wird mit einer Mischerdiode MD detektiert. Die Frequenz des Gunn-Oszillators OSZ wird mit einer Steuerspannung FMS moduliert, beispielsweise sägezahnförmig, wie dies in der Fig.2 im Zeitablaufdiagramm oben dargestellt ist. Die Frequenzsteuerspannung FMS bewirkt hierbei einen Frequenzhub FH von beispielsweise 150 MHz. Bei diesem Ausführungsbeispiel wurde eine Wiederholzeit WZ von 10 $\mu$s zugrundegelegt. Die sägezahnförmige Frequenzmodulation bewirkt nun, daß bei der Überlagerung von Sendesignal und reflektiertem Empfangssignal eine Zwischenfrequenz RES entsteht, die der Entfernung des empfangenen Meßobjektes proportional ist. Die Zwischenfrequenz RES wird in dem Verstärker VER verstärkt und zur Spektralanalyse einem Digitalfilter (Filterbank) DF zugeführt. Jedem Teilfilter läßt sich somit ein Entfernungsbereich (Entfernungstor) ET zuordnen. Die Frequenzmessung läuft nicht kontinuierlich ab. Sie wird beim Erreichen der Sägezahnspitze abgebrochen (Rücklauf RL) und mit dem nächsten Sägeszahnstart neu begonnen.

Zur optimalen Unterdrückung des Start- und Stopvorgangs werden Empfangssignale RES zeitlich gewichtet, wie dies in der Fig.2 unten für die Empfangssignale dargestellt ist (Wichtungsfunktion WF für Digitalfilter DF).

Die Ausgangssignale des Digitalfilters DF für jeweilige Entfernungstore ET werden einem Mikrorechner µR zugeführt, der zur Bildung von Geschwindigkeitskanälen jeweils weitere Spektralanalysen durchführt. Die Ausgangssignale (Fahrzeugdetektorsignale) laufen dann zum Verkehrssteuergerät VST Hier wurden Entfernungstore im Meterbereich für fünf Toren vorgesehen. Erscheint am Ausgang für ein Entfernungstor ein Signal, so bedeutet das, daß für dieses Entfernungstor - das entspricht beispielsweise einer bestimmten Fahrspur - ein Fahrzeug vorhanden ist. Die Verarbeitung der detektierten Fahrzeugsignale zur Bildung von Steuerkriterien für das Schalten der Signalgeber erfolgt im hier nicht gezeigten Verkehrsrechner des Steuergeräts VST der Verkehrssignalanlage.

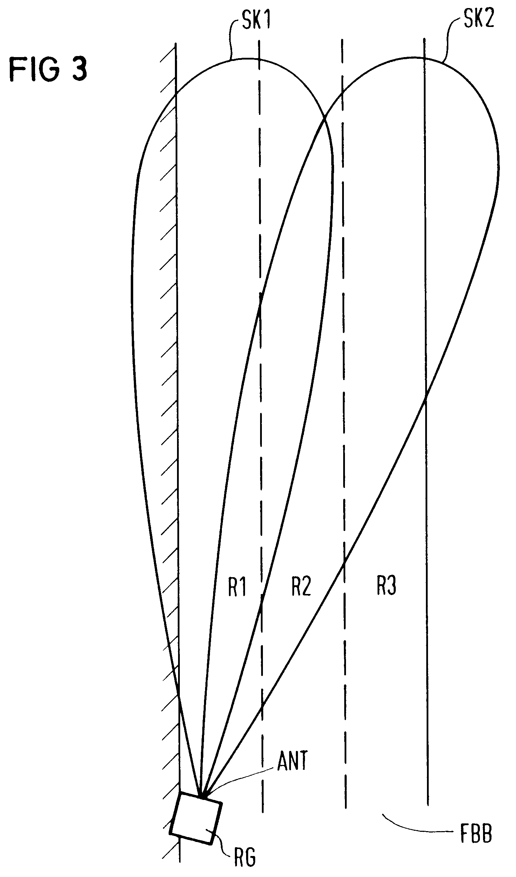

In der Fig.3 ist schematisch ein Fahrbahnbereich FFB mit drei Fahrzeugspuren R1,R2 und R3 dargestellt. Am Fahrbahnrand ist die Radarantennenanordnung RAA an einen Mast M, beispielsweise dem Mast für die Signalgeber, angeordnet. Die Radarantennenanordnung RAA weist zwei Radarantennen ANT1 und ANT2 auf, wobei die Radarantenne ANT1 den Fernbereich bis auf ca 100 m, die Antenne ANT2 den Nahbereich unmittelbar vor dem Signalgeber erfaßt. Mit dieser erfindungsgemäßen Ausgestaltung des FM-CW-Radars mit Mehrfachantenne läßt sich insofern die Leistungsfähigkeit steigern, als mit relativ geringem Aufwand der Nahbereich getrennt nach Spuren R1,R2,... erfaßt und der Fernbereich spurunabhängig mit ein und derselben Antennenanordnung RAA erfaßt wird. Dabei sind die Radarantennen ANT1,2 besonders justiert, um die hier schematisch dargestellten geometrischen Verhältnisse vor einer Kreuzung zu erfassen. Im Nahbereich ist jeder Spur R1,R2,... ein bestimmtes Entfernungstor zugeordnet, so daß die Fahrzeuge FZ, die vor dem Signalgeber stehen, getrennt nach den jeweiligen Fahrspuren R1,R2 und R3 erfaßt werden können. Der entferntere Bereich ist der anderen Antenne ANT1 zugeordnet, die einen Bereich bis etwa 100 m erfaßt. Hierbei ist für die Verkehrssignalanlagensteuerung primär von Bedeutung, daß Fahrzeuge, egal auf welcher Spur, auf den Straßenknotenpunkt zufahren, während im Nahbereich es wichtig ist, für die exakte Verkehrssignalanlagensteuerung die Fahrzeuge getrennt nach Fahrzeugspuren zu erfassen.

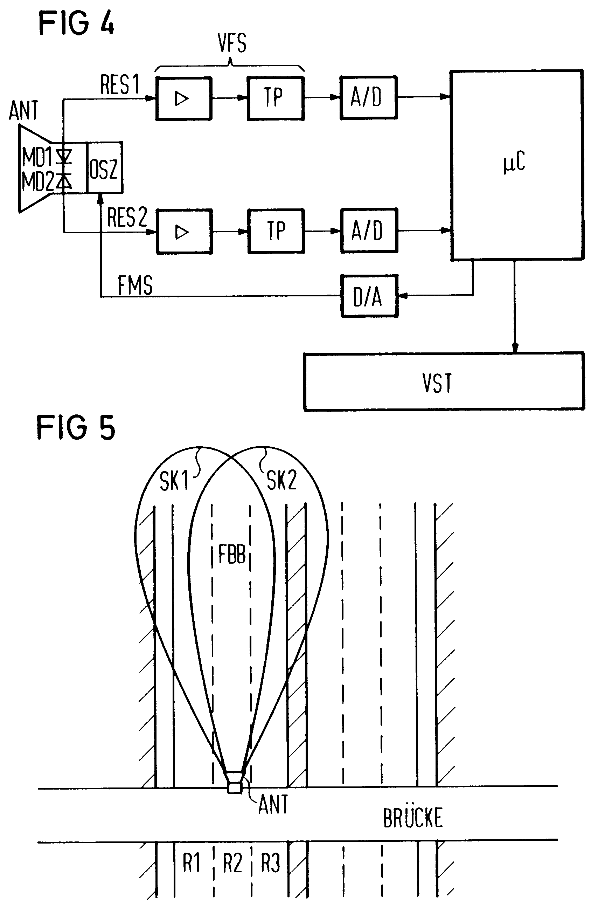

In Fig.4 ist schematisch ein dreispuriger R1,R2,R3 Fahrbahnbereich FBB vor einem Verkehrsknoten dargestellt. Am Straßenrand ist auf einem hier nicht näher gezeigten Mast das Radargerät RG mit einer Antenne ANT angeordnet, wobei das Radarteil im Winkelpeilmodus arbeitet, so daß zwei zueinander versetzte Antennenkeulen SK1 und SK2 den Straßenbereich FFB mit den drei Spuren R1,R2 und R3 ausleuchten.

Eine mögliche Ausgestaltung des Radargerätes ist in Fig.5 als Blockschaltbild gezeigt. Die Radarantenne ANT weist einen frequenzmodulierten Oszillator OSZ und zwei Mischerdioden MD1 und MD2 auf. Die daran abgegriffenen Radarempfangssignale RES1 und RES2 werden einer jeweiligen Verstärker- und Filterstufe VSF zugeführt, bestehend aus Verstärker und aliasing Tiefpaß TP. Die verstärkten und gefilterten Radarempfangssignale gelangen beispielsweise über je einen A/D-Wandler an den Mikro-Computer µC. Der Mikro-Computer µC steuert über einen D/A-Wandler die Modulation des Oszillators OSZ. Dies ist mit dem Frequenzmodulationssignal FMS angedeutet. Die im Mikro-Computer µC mittels Frequenzanalyse ermittelten Verkehrsdaten, d.h. Fahrzeugdetektordaten, werden über eine nicht dargestellte Schnittstelle dem Verkehrsrechner des Steuergerätes VST zugeführt.

In Fig. 6 ist schematisch eine Antennenanordnung mit einer Antenne ANT über einen Fahrbahnbereich FBB, z.B. ein dreispuriger (R1,R2,R3) Autobahnabschnitt, auf einer Brücke dargestellt. Die zwei Strahlungskeulen SK1 und SK2 leuchten den Fahrbahnbereich FBB symmetrisch aus. Hier können alle Fahrzeuge nach Spuren (R1,R2,R3) getrennt sowohl im Nah- als auch im Fernbereich exakt detektiert werden, wie dies oben für den Winkelpeilungsmodus beschrieben ist.

Mit Hilfe des erfindungsgemäßen Verfahrens, welches zur Fahrzeugdetektion die Radartechnik nützt, ist mit einem verhältnismäßig geringem Aufwand aufgrund der Entfernungsselektion und der Erfassung der jeweiligen Fahrzeuggeschwindigkeiten (Geschwindigkeitskanäle) ein sehr präzises Bild des Verkehrsgeschehens auf einem Straßenabschnitt erfaßbar, so daß mit diesen Daten eine gezielte und wirksame Steuerung der Verkehrssignalanlage mit Hilfe des Verkehrssteuergerätes möglich ist.

## Patentansprüche

1. Verfahren und Einrichtung zur Erfassung von Fahrzeugen (FZ) im Straßenverkehr für die Steuerung einer Verkehrssignalanlage, welche Signalgeber, ein Verkehrssteuergerät (VST) und zumindest einen Fahrzeugdetektor als Straßenverkehrssensor aufweist, wobei die Signale des Fahrzeugdetektors im Steuergerät (VST) zur Bildung von Schaltkriterien für die Verkehrssignalanlage verarbeitet werden, **dadurch gekennzeichnet,** daß der Fahrzeugdetektor von einer Radarantennenanordnung (RAA) und einem zugehörigen Radargerät (RG) mit Sender und Empfänger gebildet ist,
daß die Radarantennenanordnung (RAA) an einem zu überwachenden Fahrbahnbereich (FBB), z.B. an einem Straßenabschnitt einer Straßenzufahrt eines Verkehrsknotens oder einer Fernstraße, angeordnet ist,
und daß das Radargerät (RG) mittels Entfernungsselektion und Geschwindigkeitsselektion jeweilige Fahrzeuge (FZ) detektiert.

2. Verfahren nach Anspruch 1,
**dadurch gekennzeichnet,** daß die Entfernungsselektion, wobei eine bestimmte Anzahl von Entfernungstoren (ET) gebildet wird, für die Fahrzeug-Spurtrennung (R1,R2,...) oder/und für die Entfernungsmessungen pro jeweiliger Fahrspur dient.

3. Verfahren nach Anspruch 2,
**dadurch gekennzeichnet,** daß innerhalb eines jeden Entfernungstores (ET) Geschwindigkeitskanäle für eine zusätzliche Auswertung der Fahrzeuggeschwindigkeiten gebildet werden.

4. Verfahren nach Anspruch 3,
**dadurch gekennzeichnet,** daß das Radargerät (RG) im FM-CW-Modus betrieben wird, wobei aus den empfangenen Radarsignalen (RES) mittels einer Frequenzanalyse (DF) jeweilige Entfernungstore (ET) gebildet werden, innerhalb derer jeweilige Fahrzeuggeschwindigkeiten mittels einer weiteren Frequenzanalyse ermittelt werden.

5. Verfahren nach Anspruch 3,
**dadurch gekennzeichnet,** daß das Radargerät (RG) im Winkelpeilungsmodus betrieben wird, daß dazu zumindest zwei azimutal gegeneinander versetzte Strahlungskeulen (SK1,2) vorgesehen sind, aus deren Empfangssignale (RES1, RES2) mittels Entfernungs- und Winkelmessung Fahrzeuge im Nah- und im Fernbereich für jede Spur detektiert werden, wobei sowohl Entfernungstore (ET) als auch Geschwindigkeitskanäle gebildet werden.

6. Einrichtung zur Durchführung des Verfahrens nach Anspruch 4,
**dadurch gekennzeichnet,** daß das im FM-CW-Modus betriebene Radargerät (RG) eine Radarantennenanordnung (RAA) mit zumindest einer Radarantenne (ANT), einen frequenzmodulierten (FMS) Oszillator (OSZ), einen einer Mischerdiode (MD) nachgeschalteten Verstärker (VER) und diesem nachgeordnet eine Digitalfilterauswertungseinrichtung (DF und μR)

aufweist, dessen Ausgangssignale zur Weiterverarbeitung dem Verkehrs-Steuergerät (VST) zugeführt sind.

7. Einrichtung nach Anspruch 6,
**dadurch gekennzeichnet,** daß die Radarantennenanordnung (RAA) von einer Mehrfachantenne, zumindest einer Doppelantenne, gebildet ist, wobei eine Antenne (ANT1) für den Fernbereich fahrspurunabhängig vorgesehen ist, und wobei eine weitere Antenne (ANT2) für den Nahbereich mit für jede Fahrspur (R1, R2,...) getrennter Fahrzeugdetektion vorgesehen ist.

8. Einrichtung zur Durchführung des Verfahrens nach Anspruch 5
**dadurch gekennzeichnet,** daß das im Winkelpeilungsmodus arbeitende Radargerät (RG) eine Antennenanordnung (ANT) mit zwei Strahlungskeulen (SK1, SK2), zwei Mischerdioden (MD1, MD2) und einen Oszillator (OSZ) aufweist, daß jeder Mischdiode (MD1, MD2) eine Verstärker- und Filterstufe (VFS) nachgeschaltet ist, daß die gefilterten Radarempfangssignale digitalisiert (A/D) einem Mikro-Computer (μC) zugeführt sind, der die Entfernungstore und Geschwindigkeitskanäle bildet und den Oszillator (OSZ) des Radargerätes steuert (FMS), und daß dem Mikro-Computer das Verkehrssteuergerät (VST) nachgeschaltet ist.

9. Einrichtung nach einem der vorhergehenden Ansprüche,
**dadurch gekennzeichnet,** daß die Radarantennenanordnung (RAA) zumindest an einem Rand der Fahrbahn (FBB) angeordnet ist, wobei bei Verwendung mehrerer Antennen (ANT1,2) diese an einem gemeinsamen Mast (M) angeordnet sind.

10. Einrichtung nach Anspruch 9,
**dadurch gekennzeichnet,** daß die Radarantennenanordnung (RAA) an einem Lichtsignalgeber-Mast in vorgebbarer Höhe angeordnet ist.

11. Einrichtung nach einem der Ansprüche 6 bis 8,
**dadurch gekennzeichnet,** daß die Radarantennenanordnung (RAA bzw. ANT) über dem Fahrbahnbereich (FBB; z.B. an einer Autobahn-Brücke oder Peitschenmast) angeordnet ist.

## FIG 1

## FIG 2

FIG 3

# FIG 4

VFS

RES1 → [▷] → [TP] → [A/D] → [μC]

ANT
MD1 / MD2 / OSZ

RES2 → [▷] → [TP] → [A/D] → [μC]

FMS ← [D/A]

[VST]

# FIG 5

SK1  SK2

FBB

ANT

BRÜCKE

R1 | R2 | R3